(19) **Europäisches Patentamt / European Patent Office / Office européen des brevets**

(11) **EP 1 545 023 B1**

(12) **EUROPEAN PATENT SPECIFICATION**

(45) Date of publication and mention
of the grant of the patent:
**07.09.2016 Bulletin 2016/36**

(51) Int Cl.:
*H04B 7/08* (2006.01)    *H01Q 25/00* (2006.01)
*H01Q 3/26* (2006.01)

(21) Application number: **02807856.6**

(22) Date of filing: **31.12.2002**

(86) International application number:
**PCT/CN2002/000946**

(87) International publication number:
**WO 2004/030239 (08.04.2004 Gazette 2004/15)**

(54) **A SMART ANTENNA AND A METHOD AND A DEVICE FOR FORMING BEAM OF THE SMART ANTENNA**

INTELLIGENTE ANTENNE UND VERFAHREN UND EINRICHTUNG ZUR BILDUNG EINES STRAHLS DER INTELLIGENTEN ANTENNE

ANTENNE À MICROPROCESSEUR ET PROCÉDÉ ET DISPOSITIF DE FORMATION DE FAISCEAU POUR CETTE ANTENNE À MICROPROCESSEUR

(84) Designated Contracting States:
**DE FR GB**

(30) Priority: **24.09.2002 CN 02137238**

(43) Date of publication of application:
**22.06.2005 Bulletin 2005/25**

(73) Proprietor: **ZTE Corporation**
**518057 Shenzhen City,**
**Guangdong Province (CN)**

(72) Inventors:
• **WANG, Yanwen,**
**ZTE Plaza**
**Shenzhen,**
**Guangdong 518057 (CN)**
• **CHI, Lidong,**
**ZTE Plaza**
**Shenzhen,**
**Guangdong 518057 (CN)**

(74) Representative: **Awapatent AB**
**Junkersgatan 1**
**582 35 Linköping (SE)**

(56) References cited:
| | |
|---|---|
| **EP-A- 1 093 241** | **EP-A- 1 161 001** |
| **WO-A-00/51364** | **CN-A- 1 357 975** |
| **JP-A- H11 298 388** | **JP-A- 2002 204 194** |
| **JP-A- 2002 262 328** | **US-A- 5 714 957** |
| **US-B1- 6 177 906** | **US-B1- 6 177 906** |

• **KITAHARA M ET AL: "A BASE STATION ADAPTIVE ANTENNA FOR DOWNLINK TRANSMISSION IN A DS-CDMA SYSTEM" VTC 2000-SPRING. 2000 IEEE 51ST. VEHICULAR TECHNOLOGY CONFERENCE PROCEEDINGS. TOKYO, JAPAN, MAY 15-18, 2000; [IEEE VEHICULAR TECHNOLGY CONFERENCE], NEW YORK, NY : IEEE, US, vol. CONF. 51, 15 May 2000 (2000-05-15), pages 710-715, XP000967962 ISBN: 978-0-7803-5719-8**

## Description

### Field of The Invention

The present invention relates to radio communication, and more particularly, to a technique for forming beam of a smart antenna.

### Background of The Invention

With the rapid development of mobile communication system in the world, as one of the key technologies of 3rd generation mobile communication system, smart antenna technology obtains more attention. Usually the most important task of beam forming for the spatial time signal received by the smart antenna is to estimate the time delays of different paths. If no accurate delay parameter, there is no way of adaptive beam forming to estimate the time delays of different paths. The estimation of time delays is before the beam forming, that is to say, while time delays estimating, undesired users out of the beam cannot be controlled by the beam, and signals of all activated users (in a certain sector) will all be received and interfered with each other. In a base station without the smart antenna, the maximum number of users which are activated simultaneously contained in the base station is fixed; and if exceeds the number, time delay estimation will become difficult. And the base station equipped with smart antenna has no difference with the base station without smart antenna in time delay estimation if no additional measures are adopted before beam forming. That is to say, it contains almost the same maximum number of users as the base station without smart antenna. Obviously, the smart antenna does not function of extending the base station's capacity. Therefore, additional effective measures must be adopted in time delay estimation so that time delay estimation can be performed normally when the number of activated users is more than that of ordinary base stations.

At present, people usually use adaptive beam algorithm, or assume that the time delay is known, or just input the information of a single antenna into a searcher to find the peak value with the biggest energy in order to determine time delay information. However, since no null field information of the antenna array is used, the accuracy of time delay searching cannot be ensured. Chinese invention patent application CN1198045 disclosed a method to improve the conventional adaptive beam antenna, which content is included herein for reference. Besides keeping the necessary equipment buildup and operation steps in conventional method, the patent adds a set of equipment required for second control signal in estimating the moving orientation of the mobile users. The invention could improve the antenna's capability but has the following disadvantages: the high requirement for calculation speed cannot be lowered since the conventional method of calculating complex weighted factors is followed; system costs and maintenance expenses are increased since extra equipment relative to second control signal need to be added, such as moving orientation estimator and radiation pattern rotator in base stations and GPS receiver in mobile stations.

Furthermore, another Chinese invention patent application CN1235391 disclosed an adaptive array antenna of pre-optimized forming beam, which content is included herein for reference. According to said invention, calculation for complex weighted value while adaptive processing is divided into two parts, which are initial weight design and operation weight processing. Wherein the initial weight design is accomplished in forming the antenna system so as to form and optimize the adaptive antenna pattern; phase calculation of operation weight is done when antenna is in operation, and the main lobe of optimized pattern is rotated toward the coming orientation of useful signals in order to interfere it falling into Low Level minor lobe area therefore restrains interference. In said invention, it requires the antenna multiplies the initial weight and the operation weight during operation process, which increases amount of calculation and has higher demand for initial weight, so that error in initial weight design will affect the final result greatly.

An adaptive transmitter/recceiver is described in EP1093241A1 which estimates a path arrival direction by using a reception antenna weight of a k-th user adaptive reception unit. An arrival path is estimated from the reception antenna weight and a transmission direction is predicted from the estimated arrival direction to generate a transmission antenna weight. US patent 6, 177, 906 B1 describes an adaptive antenna array in which a first adaptive method modifying a weight vector is used to improve a vector value followed by a second iterative process. A further adaptive antenna arrangement is described by Minako Kitahara et al. in VTC2000-Spring. 2000 IEEE 51st Vehicular Technology Conference Processings, Vol.2, pp 710-715. In this arrangement, the adaptive antenna is controlled according to the bit rate of the users. Amultibeam receiving apparatus is disclosed in EP1161001 A2. A searcher section is provided which generates multiple beams and provides delay profile estimates. A finger section includes beam formation devices which beam weights being determined on the basis of outputs of the searcher section.

### Summary of the Invention

According to one aspect of the present invention, it provides a method for forming beam of a smart antenna, comprising: multipath scanning of received signals with discrete beams to obtain multipath delayed information; aligning time delays of the received signals on the basis of the multipath delayed information; and forming adaptive beams for the received signals whose time delays have been aligned;

wherein the steps of forming the adaptive beams include: finding an initial weighted value by using a pilot signal of a special control channel as a reference signal; performing spatial domain treatment of the signal received by an antenna array by using the initial weighted value; obtaining determination output of special control channel information on the basis of the signal performed by the spatial domain treatment above; finding optimized weighted value according to a known and determined special control channel information; and using the optimized weighted value above to form beam and processing the special data channel information;

wherein the steps to find the initial weighted value include: spreading and scrambling pilot bits of the known special control channel; calculating correlation matrix of pilot signal obtained by said spreading and descrambling and pilot signal received by an antenna array; and finding approximate solution of the correlation matrix as the initial weighted value according to Minimum Mean Square Error criterion.

According to another aspect of the present invention, it provides a device for forming beam of the smart antenna, comprising: a spatial domain beam forming module for forming beam of the signal received by the antenna array; a time domain matched filtering module for gaining transmitted data according to the signal beam formed by the spatial domain beam forming module; and a re-spreading and scrambling feedback module for generating the reference signal and feeding back the reference signal to the spatial domain beam forming module according to data information gained by the time domain matched filtering module; wherein the spatial domain beam forming module consisting of a multipath scanning delay alignment unit for multipath scanning with discrete beam to gain delay information and aligning delays for the signals received by the antenna array;

wherein the spatial domain beam forming module is further configured for: finding an initial weighted value by using a pilot signal of a special control channel as a reference signal; performing spatial domain treatment of the signal received by an antenna array by using the initial weighted value; obtaining determination output of special control channel information on the basis of the signal performed by the spatial domain treatment above; finding optimized weighted value according to a known and determined special control channel information; and using the optimized weighted value above to form beam and processing the special data channel information;

wherein the re-spreading and scrambling feedback module is further configured for spreading and scrambling pilot bits of the known special control channel; the spatial domain beam forming module is further configured for: calculating correlation matrix of pilot signal obtained by said spreading and descrambling and pilot signal received by an antenna array, and finding approximate solution of the correlation matrix as the initial weighted value according to Minimum Mean Square Error criterion.

According to a further another aspect of the present invention, it provides a smart antenna, comprising: an antenna array composed of a plurality of array elements and a foregoing device for forming beam.

## Brief Description of the Drawings

These and other advantages, aims and features of the present invention will be more fully rendered obvious by, the following detailed description of the preferred embodiments of the invention together with the accompanying drawings hereinafter:

Fig.1 shows a flow chart of the process of a smart antenna forming beam in accordance with an embodiment of the present invention;

Fig.2 shows a block chart of forming a device for forming beam of the smart antenna in accordance with an embodiment of the present invention;

Fig.3 shows a block chart of forming the multipath scanning delay alignment unit in accordance with an embodiment of the present invention;

Fig.4 shows the demodulation treatment of the receiving signal;

Fig.5 shows one example of forming the time delay searcher;

Fig.6 shows one example of forming the code filter;

Fig.7 is a schematic diagram of the space layout of the smart antenna in accordance with an embodiment of the present invention; and

Fig.8 and fig.9 are curve graphs showing input-output signal to jamming noise ratio in accordance with an embodiment of the present invention.

## Detailed Description of The Preferred Embodiments:

Now, preferred embodiments of the present invention will be described with reference to the accompanying drawings.

Tig.1 shows a flow chart of the process of a smart antenna forming beam in accordance with an embodiment of the present invention. In an adaptive beam smart antenna, in order to avoid the phenomenon of estimating time delay difficulty when the number of users activated at the same time exceeds the maximum containing capacity of a regular base station, the present invention conducts scanning with discrete beam, i.e., in an assigned sector, the smart antenna functions in adaptive forming beam tracking users on one hand, and on the other hand, scans back and forth with beams in order to complete the mission of searching users.

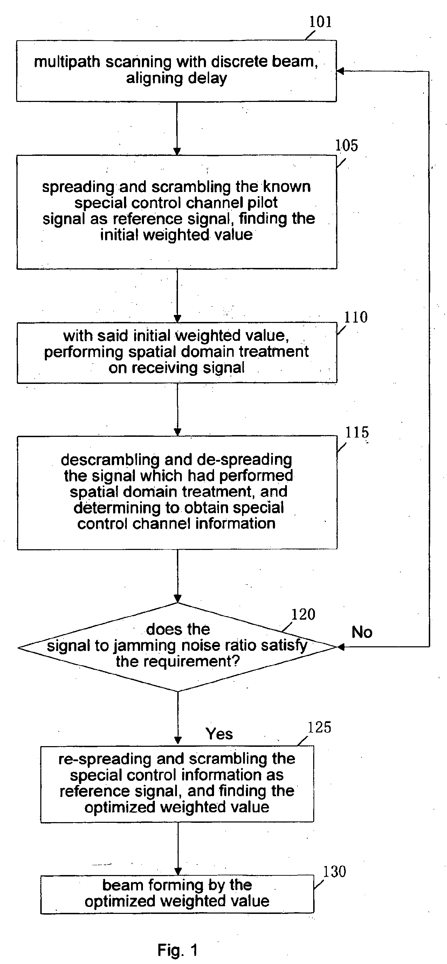

As shown in fig. 1, at first in step 101, multipath scans with discrete beams. In this embodiment, preferably, scans back and forth in an allocated area or sector by discrete method at a preset interval of angles with a single beam; when a desired user is scanned in some location, gains time delay estimation by matched filtering method and the likes, and regards the estimation as the basis of adaptive forming beam.

Then in step 105, aligns time delay of received signals according to the time delay information gained by multipath scanning, and finds an initial weighted value by using the known special control channel pilot symbol as the reference signal. Finds relative matrix $r_{xd} = E[X_p d^*]$ of pilot signal $X_p$ received by the antenna array and the reference signal d with regarding the spreading and scrambling signal in pilot bit as a reference signal$^d$ ; and finds approximate solution of the relative matrix according to Minimum Mean Square Error criterion, as the initial weighted value $W = r_{xd}$.

In step 110, performs spatial domain treatment on the signal received by an array according to the initial weighted value calculated from last step, and in accordance with searched multipath information, respectively conducts beam forming for each large delay multipath component of the users, conducts beam forming for signals in pilot period received by the array $Y_p = w^H X_p$, and conducts beam forming for signals in non-pilot period received by the array $Y_1 = W^H X_t$.

Further in step 115, de-spreads and descrambles the spatial treated signals, and determines to gain the special control channel information. Particularly, descrambles the pilot period in control part $P_s(k) = Y_p(k) S^*_{dpch}(k)$, and de-spreads the pilot period $Z(k) = \dfrac{1}{SF} \displaystyle\sum_{i=(k-1)*SF+1}^{i=k*SF} P_s(i) c_{cch}(i)$ . In the above formulas, $k$ means the serial number of information symbols, $SF$ is the spreading factor of the special control channel, $S_{dpch}(\cdot)$ is scrambling code, and $c_{cch}(\cdot)$ is the spreading code of the special control channel. In a special physical channel, the control part and the data part are transmitted by code division multiplexing, wherein the spreading factor in the control part is fixed as SF=256 if the multi code transmission of the special physical channel is not considered.

Estimates binary gain $G_c(l) = \dfrac{1}{q} \displaystyle\sum_{k=1}^{q} Z(k)$ No. $l$ Rake combined multipath by the de-spreading and descrambling result of pilot period information, and in this formula q is digit of pilot bits; processes channel compensation and determines the control information sent by the users $d_c = sign(imag(Y_t) G^*_c(l))$, and in this formula $sign$ means symbol determination calculation, and $imag$ means calculation adopting imaginary part.

Then in step 120, calculates the signal to jamming noise ratio of the special control channel, and judges if this ratio satisfies requirement. The judgment can be performed by comparing the gained signal to jamming noise ratio with a preset threshold. Takes a WCDMA system as an instance, this preset threshold can be 4-7dB or even lower. If the signal to jamming noise ratio of is judged bigger than the preset threshold, proceeds to step 125, otherwise returns to step 101 and conducts multipath scanning again.

Further in step 125, re-spreads and scrambles the special control channel information as the reference signal to find the optimized weighted value. For example, in WCDMA system, 3-8 symbols in front of 10 symbol bits of every time slot in the control part are known pilot symbols, so in one embodiment of the present invention, preferably, conducts re-spreading and scrambling by pilot symbols instead of the judgment results at the time of pilot period to overcome the negative effect caused by judgment error and make the weighted value in close proximity to the optimal weighted value. And at the time of non-pilot period, spreads the determined non-pilot period information $d_d(t) = d_c(t) c_{dch}(t)$, and conducts scrambling $d_s(t) = d_d(t) S_{dpch}(t)$.

Therefore, forms a new reference signal $d_1 = [d\ d_s]$. Since OVSF code $c_{cch} = C_{ch,256,0}$ is always used in spreading in the control part, all 256 data of the spreading code sequence is 1, which is very advantageous to reduce calculation complexity of de-spreading and re-spreading algorithm. Finally, receives signals $X_1 = [X_p\ X_t]$ by the new reference signal and new array, calculates relative matrix $r_{xd} = E[X_1 d_1^*]$ , and finds the optimized weighted value $W_{opt} = r_{xd}$ according to Minimum Mean Square Error criterion.

At last, in step 130, performs treatment for the special data channel by the optimized weighted value and beam forming. Since the transmitting paths in air of the control part and the data part are the same, the weighted value gained by updating the control part is also applicable to the data part, thus finds corresponding data information according to the obtained optimized weight value.

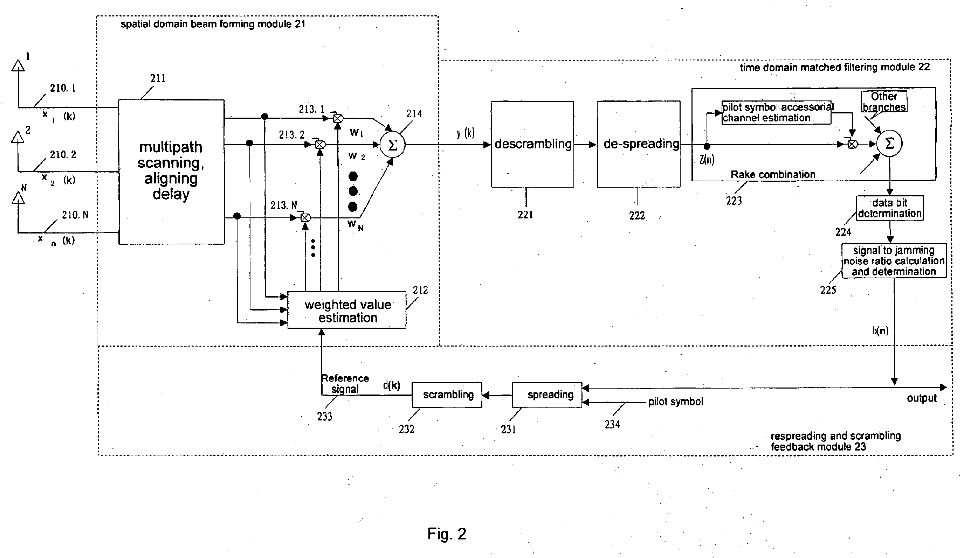

Fig.2 shows a block chart of forming a device for forming beam of the smart antenna in accordance with an embodiment of the present invention. As shown in fig. 2, the smart antenna according to the embodiment comprises: an antenna array consists of a plurality of array elements (210.1-210.N), a spatial domain beam forming module 21, a time domain matched filtering module 22 and a re-spreading and scrambling feedback module 23. The antenna array elements (210.1-210.N) further comprises each antenna front end respectively (not shown in the drawing) to receive radio frequency and transfer into receiving signals $X = [x_1, x_2, \cdots x_N]$, which is known by the skills in this technical field.

Wherein the spatial domain beam forming module 21, the time domain matched filtering module 22 and the respreading and scrambling feedback module 23 also make up the device for beam forming of the smart antenna according to the embodiment of the present invention. The smart antenna and the device for beam forming thereof will be described in detail combining with the accompanying drawings hereinafter.

The spatial domain beam forming module 21 connects with each array element of the antenna array (210.1-210.N) for beam forming the receiving signals of the antenna array $X = [x_1, x_2, \cdots x_N]$. The spatial domain beam forming module 21 comprises: a multipath scanning delay alignment unit 211, a weighted value estimation unit 212, a multiplier 213.1-213.N and an adder 214.

The multipath scanning delay alignment unit 211 is used for multipath scanning with discrete beam to gain delay information and to align delays for the signal received by the antenna array. The most important task of forming beam for the time spatial signal received by the base station with a smart antenna in Code Division Multiple Access system is to estimate the time delay of different paths. If no accurate delay parameter, there is no way of adaptive beam forming. The estimation of time delay is before the beam forming, that is to say, while time delay estimating, undesired users out of the beam cannot be controlled by the beam, and signals of all activated users (in a certain sector) will all be received and jammed by each other. In order to radically solve this problem, the present invention conducts scanning by the discrete beam, i.e., in an assigned sector, the deployed smart antenna functions in adaptive beam forming tracking users on one hand, and on the other hand, scans back and forth with beams in order to complete the mission of searching users. The multipath scanning delay alignment unit 211 will be described in detail combining with its accompanying drawing hereinafter.

Time delay aligned signals $X = [x_1, x_2, \cdots x_N]$ are transmitted to the corresponding a plurality of multipliers 213.1-213.N and the weighted value estimation unit 212 at the same time. The weighted value estimation unit 212 is used for calculating out appropriate weighted values $w_1, w_2, ..., w_N$ for beam forming according to the reference signals generated by re-spreading scrambling feedback module 23 and the signals received from the antenna array $X = [x_1, x_2, \cdots x_N]$. Particularly, calculates the relative matrix of the reference signals and the receiving signals of the antenna array, and finds approximate solution of the relative matrix according to Minimum Mean Square Error criterion, as the weighted values. The multipliers 213.1-213.N conduct multiplying algorithm respectively in accordance with the corresponding weighted values $w_1, w_2, ..., w_N$. The multiplying algorithm results are summed in the adder 214 and output to the time domain matched filtering module 22 as the beam forming result.

The time domain matched filtering module 22 comprises: a descrambling unit 221, a de-spreading unit 222, a Rake combination unit 223, a data bit determination unit 224 and a signal to jamming noise ratio calculation determination unit 225. The descrambling unit 221 and the de-spreading unit 222 are used for descrambling and de-spreading the beam formed signals. The Rake combination unit is used for Rake combining multipath signals. The data bit determination unit is used for determining output transmitted data for Rake combined signals. And the signal to jamming noise ratio calculation determination unit 225 is used for calculating the signal to jamming noise ratio of the determined data and the receiving signals, and compares the calculated signal to jamming noise ratio with the preset threshold to see if the requirement is satisfied.

The re-spreading scrambling feedback module 23 comprises: a spreading unit 231 and a scrambling unit 232. When the signal to jamming noise ratio calculation determination unit 225 judges that the signal to jamming noise ratio satisfies the requirement, the spreading unit 231 and the scrambling unit 232 spread and scramble the determined data output from the time domain matched filtering module 22 to generate the reference signal $d(k)$. When the signal to jamming noise ratio calculation determination unit 225 judges that the signal to jamming noise ratio does not satisfy the requirement or no determined data, the spreading unit 231 and the scrambling unit 232 spread and scramble by the known special control channel pilot bit as the reference signal $d(k)$.

The embodiment is described hereinafter by taking a mobile equipment user $m$ as an example.

At first, respectively conducts forming beam on the spatial domain beam forming module 21 for each large delay multipath component of the user $m$, and sets the receiving weighted vector of user $m$ 's No. $l$ multipath component as $W_{m,l} = [w_1, w_2, ..., w_N]^T$, then multiplies the input components $x_1, x_2, \cdots x_N]$ correspondingly with the weighted value components $w_1, w_2, ..., w_N$ by multiplier 213.1, 213.2...213.N, and inputs the output of each multiplier to the adder 214 for gaining the output of user $m$'s No. $l$ multipath beam forming device:

$$y_{m,l}(k) = \sum_{j=1}^{N} x_j(k) w_j^*(k)$$

Takes the output of user *m*'s No. *l* multipath spatial domain beam forming module 21 as the input of the descrambling unit 221 and the de-spreading unit 222 to descramble and de-spread:

$$z_{m,l}(k) = \frac{1}{SF} \sum_{n=(k-1)\cdot SF+1}^{k\cdot SF} y_{m,l}(n) c_m(n)$$

Takes the output of the de-spreading unit 222 as the input of pilot symbol accessorial Rake combination unit 223, and estimates the complex amplitude of each multipath by the pilot signals in the pilot symbol accessorial Rake combination unit 223. Supposing that there are q pilot symbols in one time slot, power of the desired user's multipath signal is far more than jamming and noise, and by the simple average estimating method of the non-pilot bit data channel estimation in one time slot obtained by the pilot symbols, the channel of user *m*'s No. *l* multipath component is estimated as:

$$g_{m,l} = \frac{1}{q} \sum_{k=1}^{q} z_{m,l}(k)$$

Then conducts Rake combination according to the channel estimation of each multipath component with Maximum Ratio Principle, and makes determination in the data bit determination unit 224. Supposing n is the data bit digit, gains the output of user *m*:

$$b_m(n) = sign(\sum_{k=1}^{q} imag(z_{m,l}(k)) g_{m,l}^*)$$

Finally, judges the threshold of signal to jamming noise ratio through the signal to jamming noise ratio calculation determination unit 225, and inputs data bit satisfied the judgment threshold to the re-spreading scrambling feedback module 23.

Since the transmitting paths in air of the control part and the data part are the same, the weighted value gained by update is also applicable to the data part. 3-8 symbols in front of 10 symbol bits of every time slot in the control part are known pilot symbols, thus conducts re-spreading and scrambling by pilot symbols instead of the judgment results at the time of pilot period to overcome the negative effect caused by judgment error and make the weighted value in close proximity to the optimal weighted value. At the time of non-pilot period, if No. *n* bit *b(n)* of some user's control part is detected correctly, herein is the output of the detector, the signal wave form of this user in the time interval [(n-1)Tb,nTb] (Tb is bit period, and n is positive integer) can be obtained by the re-spreaded and detected data bit *b(n)* of the user's control part. Respectively accomplishes spreading and scrambling for output of the signal to jamming noise ratio calculation determination unit 225 and a known pilot symbol 234 by the spreading unit 231 and scrambling unit 232, and makes the code stream as a new reference signal 233 to adjust the weighted value of this user for beam forming.

While starting to receive the signals sent by the users, there is no determination output *b(n)*, and the re-spreading scrambling feedback module 23 re-spreads and scrambles the known pilot symbols as the reference signals. And the weighted estimation unit 212 calculates the relative matrix of the reference signals and the receiving pilot signals of the antenna array, and finds the approximate solution of the relative matrix according to Minimum Mean Square Error criterion, as the initial weighted value. Besides, when the signal to jamming noise ratio calculation determination unit 225 is judged not satisfying the requirement, the re-spreading scrambling feedback module 23 also re-spreads and scrambles the known pilot symbols as the reference signals, and the weighted value estimation unit 212 recalculates the relative matrix of the reference signals and the receiving pilot signals of the antenna array, and finds the approximate solution of the relative matrix according to Minimum Mean Square Error criterion, as the initial weighted value.

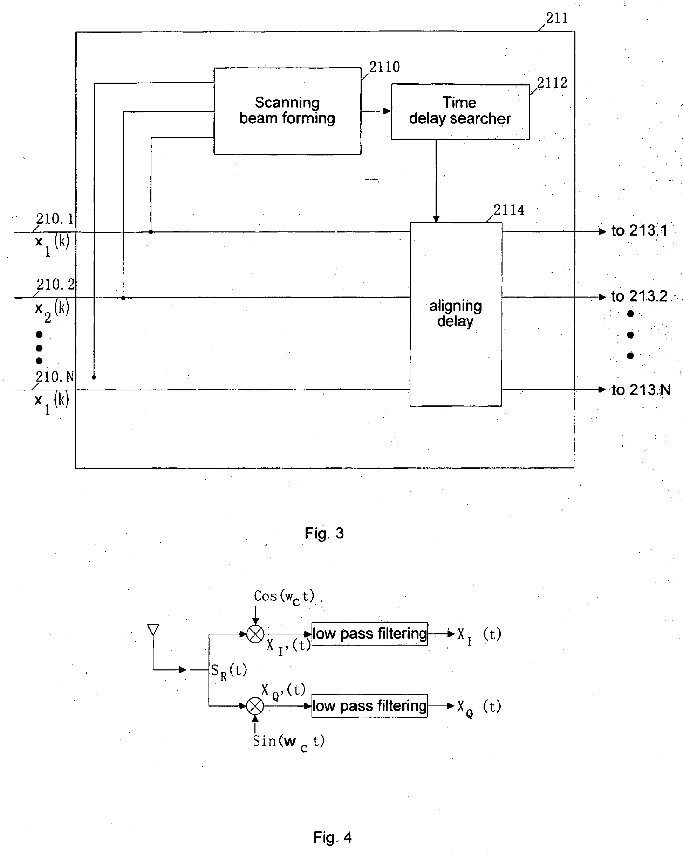

Fig.3 shows a block chart of forming the multipath scanning delay alignment unit in accordance with an embodiment of the present invention. As shown in fig. 3, the multipath scanning delay alignment unit 211 comprises: a scanning beam forming unit 2110, a time delay searcher 2112 and a time delay alignment unit 2114.

The receiving signals from the antenna array are transmitted to the time delay alignment unit 2114 and the scanning beam forming unit 2110 at the same time. The scanning beam forming unit 2110 is used for forming the receiving signals into scanned beam with the beam forming principle essentially as the same as the above described, and the only difference is that the weighted value of each array element is pre-calculated in accordance with the requirement, i.e., the calculated weighted values form the single beam precisely to discretely scan the allocated areas and sectors in a preset angle interval. The time delay searcher 2112 is used for searching multipath delays for scanning beam formed by the scanning beam forming unit 2110. And the time delay alignment unit 2114 aligns delays for multipath signal received by the antenna array according to the multipath delay searched by the time delay searcher 2112 and respectively outputs to the corresponding multipliers 213.1-213.N.

Forming of the time delay searcher 2112 and the treatment process of time delay searching are described hereinafter accompanying with fig. 4-6.

Fig.4 shows the demodulation treatment of the receiving signal. Set the signaling of a mobile station is:

$$s_T(t) = I(t)\cos(\omega_c t) + Q(t)\sin(\omega_c t) \qquad (1)$$

Wherein $\omega_c$ is carrier frequency, I is in phase component, Q is orthogonal component. Sets the decay factor of wireless space path as $\alpha$, time delay as $\tau$, phase shift as $\phi = \omega_c \tau$, so the signal received by the antenna in the base station is

$$s_R(t) = \alpha[I(t-\tau)\cos(\omega_c t + \phi) + Q(t-\tau)\sin(\omega_c t + \phi)] \qquad (2)$$

As shown in fig. 4, radio frequency signal $s_R(t)$ beam forms by the scanning beam forming unit 2110 at first, and then passes through down-conversion and low pass. Wherein

$$X_{I'}(t) = S_R(t) * \cos\omega_c t$$
$$= \frac{\alpha}{2}I(t-\tau)[\cos(2\omega_c t + \phi) + \cos\phi] + \frac{\alpha}{2}Q(t-\tau)[\sin(2\omega_c t + \phi) + \sin\phi] \qquad (3)$$

After passing through low pass, we obtain:

$$X_I(t) = \frac{\alpha}{2}[I(t-\tau)\cos\phi + Q(t-\tau)\sin\phi] \qquad (4)$$

And in a similar way, we can obtain:

$$X_Q(t) = \frac{\alpha}{2}[-I(t-\tau)\sin\phi + Q(t-\tau)\cos\phi] \qquad (5)$$

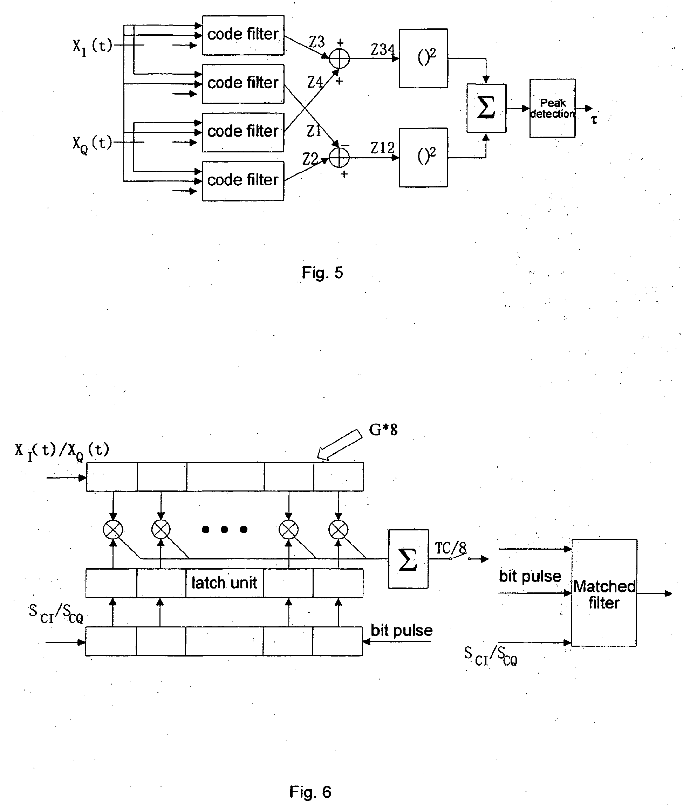

Fig.5 shows one example of forming the time delay searcher, and fig.6 shows one example of forming the code filter, wherein TC is clock circle. Code filter takes bit pulse as its benchmark, supposing either long scrambling code or short scrambling code can be used for 8 multiples of over sampling and scrambling in the special data channel (DPDCH) with selecting register's length of SF*8 (SF is scrambling factor). $S_1$ shows the real part of the scrambling code, and $S_Q$ shows the imaginary part of the scrambling code. For the long scrambling code, it is a non-periodic code filter, and for the short scrambling code, it is a periodic code filter. Since the output of the code filter only relates to the control information but not to the service channel information. After the output of quadruplex code filter is non-coherent processed, respectively adds (Z12)2 with (Z34)2, thus gains energy distribution of user's signals and obtains estimation of the time delay $\tau$ after peak detection. A plurality of peak values can be obtained for multipath signals with different time delays, and the height of peak values indicates the strength of the signal in said path (i.e., energy distribution of user's signals), therefore the time delay of said path can be determined by the location of the peak value.

The searching process is described in details as below:

For example, in a WCDMA wireless multipath channel, the user has L paths, so the channels correspond as:

$$h(t) = \sum_{l=1}^{L}\alpha_l\delta(t-\tau_l)e^{j\phi_l} \qquad (6)$$

In the above formula, $\tau_l$, is the time delay, $\alpha_l$, is the decay factor and $\phi_l$, is the phase of the user's No. *l* path respectively, and time delay searching is estimating $\tau_l$. Since the multipath signaling is a processing of superimposing a plurality of single paths, for not failing in generality, we only consider derivation under the condition of single user, single path without disturbing.

According to formulas (4) and (5), we can get $X_I(t)$ and $X_Q(t)$, and perform the following processing:

$$X_I(t) \bullet S_{CQ}(t') = \frac{\alpha}{2} I(t-\tau) S_{CQ}(t') \cos \phi + \frac{\alpha}{2} Q(t-\tau) S_{CQ}(t') \sin \phi \qquad (7)$$

In the above formula, $S_{CQ}(t)$ shows the imaginary part of the scrambling code, $t'$ shows the time delay $(t\text{-}\tau')$ of the scrambling code. Separate control channel will be gained after is filtered by channelizing code $Cc(t)$. And since all the channelizing code of the special control channel (DPCCH) is 1 and due to the orthogonality of the channelizing code:

$$X_I(t) \bullet S_{CQ}(t') = -\frac{\alpha}{2} \beta_c b_c(t-\tau) S_{CQ}(t-\tau) S_{CQ}(t') \cos \phi$$

$$+ \frac{\alpha}{2} \beta_c b_c(t-\tau) S_{CI}(t-\tau) S_{CQ}(t') \sin \phi \qquad (8)$$

In the same way:

$$X_Q(t) \bullet S_{CI}(t') = \frac{\alpha}{2} \beta_c b_c(t-\tau) S_{CI}(t-\tau) S_{CI}(t') \cos \phi$$

$$+ \frac{\alpha}{2} \beta_c b_c(t-\tau) S_{CQ}(t-\tau) S_{CI}(t') \sin \phi \qquad (9)$$

If the path is searched by the code filter, i.e., when $t' = t - \tau$ and the length of the code filter is G*8chip, then

$$\sum_{i=0}^{G} S_{CI}(i) S_{CQ}(i) = 0. = 0.$$ Thus, in accordance with formulas (8) and (9), further gain:

$$Z1 = \int_{(n-1)T_b}^{nT_b} X_I(t) \bullet S_{CQ}(t') dt = -\frac{\alpha \beta_c}{2} b_{c,n} \cos \phi G \qquad (10)$$

$$Z2 = \int_{(n-1)T_b}^{nT_b} X_Q(t) \bullet S_{CI}(t') dt = \frac{\alpha \beta_c}{2} b_{c,n} \cos \phi G \qquad (11)$$

Wherein $T_b$ is bit period, $b_{c,n}$ is No. n bit of $b_c$, and G is scrambling multiple. Combines Z1 with Z2 to gain:

$$Z12 = Z2 - Z1 = \alpha \beta_c b_{c,n} \cos \phi G \qquad (12)$$

In the same way:

$$Z3 = \int_{(n-1)T_b}^{nT_b} X_I(t) \bullet S_{CI}(t') dt = \frac{\alpha \beta_c}{2} b_{c,n} \sin \phi G \qquad (13)$$

$$Z4 = \int_{(n-1)T_b}^{nT_b} X_Q(t) \bullet S_{CQ}(t')dt = \frac{\alpha\beta_c}{2}b_{c,n}\sin\phi G \qquad (14)$$

$$Z34 = Z3 + Z4 = \alpha\beta_c b_{c,n}\sin\phi G \qquad (15)$$

Therefore we can add (Z12)2 with (Z34)2 respectively, power distribution of user's signals can be obtained, and gain time delay $\tau$ estimation via peak detection.

In a perfect condition, if $t'=t-\tau$, the Z value gained from code filtering will be bigger than 0; when $t' \neq t - \tau$, the Z value gained from code filtering will constantly be 0, so under this circumstance, the time delay can be determined once the location of Z value which is not 0 is searched. However, because the self dependency and mutual dependency are not perfect, as well as noise influence and over sampling also do not exclude that a bigger peak value appears (be referred to as pseudo peak value), it brings problem and difficulty for time delay estimation. In order to estimate time delay precisely, two questions should be solved: one is to fix a reasonable peak value threshold to eliminate pseudo peak value; and the other one is to detect the real peak value location among multiple Z values which are far more than the peak value thresholds so as to precisely estimate the time delay.

In this embodiment, the peak value threshold adopts the Z value bigger than 4 multiples of the average power of all the receiving signals before filtering as the peak value threshold $\delta$. In peak detection, the left gradient of the maximum value is bigger than 0, but the right gradient is smaller than 0. And peak value threshold detecting comprises the following main parts:

(1) coarse selecting peak value

Among Z values, select the points bigger than the peak value threshold as the candidate peak points $k$ ($k\in P$) $\{P|Z(P) \geq \delta\}$. P is the aggregate of possible peak point with the unit of 1/8chip. And among these selected candidate peaks, some points near the real peak might be contained, which are not peak points and need to be further processed.

(2) pre-processing before selecting peak value

Before selecting peak values, adopt the symbolic function $D_l(k)$ of the left gradient:

$$D_l(k) = sign[Z(k) - Z(k-1)] \qquad (16)$$

and the symbolic function $D_r(k)$ of the right gradient:

$$D_r(k) = sign[Z(k) - Z(k+1)] \qquad (17)$$

(3) peak recognition logic

The peak recognition logic can be easily got on the basis of the above pre-processing according to the characteristic of the peaks. If $k$ is the peak point, then:

$$D_l(k) + D_r(k) = 2 \qquad (18)$$

And at the non-peak point, there must be

$$D_l(k) + D_r(k) \leq 1 \qquad (19)$$

Detecting the points aggregate satisfying the formula (18), and multiplying it with the endurance of 1/8chip gets the required time delay $\tau_l$ ($l = 1,2,3,\cdots, L$), and L is the number of paths which can be detected

Each part composing of the above mentioned device for beam forming of the smart antenna in the embodiment of the present invention can be hardware module or software module, and these modules can be made in special chips or FPGA, or some modules can be realized in DSP by software.

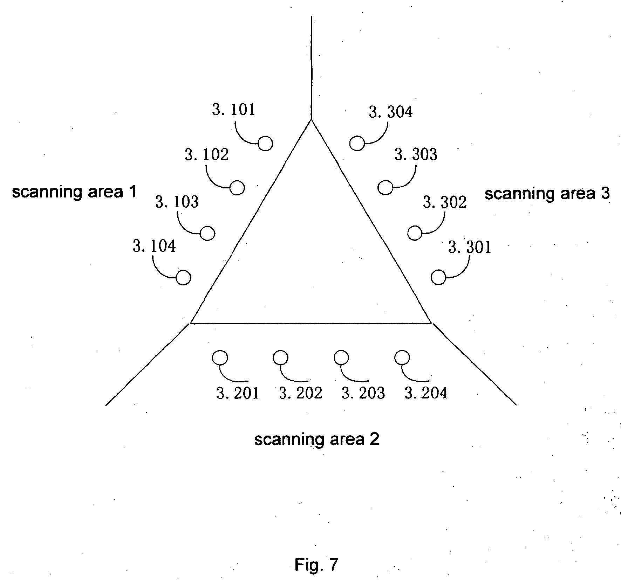

Fig.7 is a schematic diagram of the space layout of the smart antenna in accordance with an embodiment of the present invention. At present, directional antenna is popularly used in cellular plots, and each plot is divided into three sectors. In the embodiment of the present invention shown in fig. 7, the antenna array is composed of three groups of even line array units, which are the first group of 3.101, 3.102, 3.103 and 3.104, the second group of 3.201, 3.202, 3.203 and 3.204 and the third group of 3.301, 3.302, 3.303 and 3.304 with scanning the spatial scale of 120° by each group of antennas. This scanning will not take too much time, because one sector is 120°, the number of antenna array elements is 4, and the least width of the lobe at this point is 25.25°, then if the angle interval of discrete beam scanning is selected to be 25°, one scanning can be accomplished by only 5 beam angular transformations.

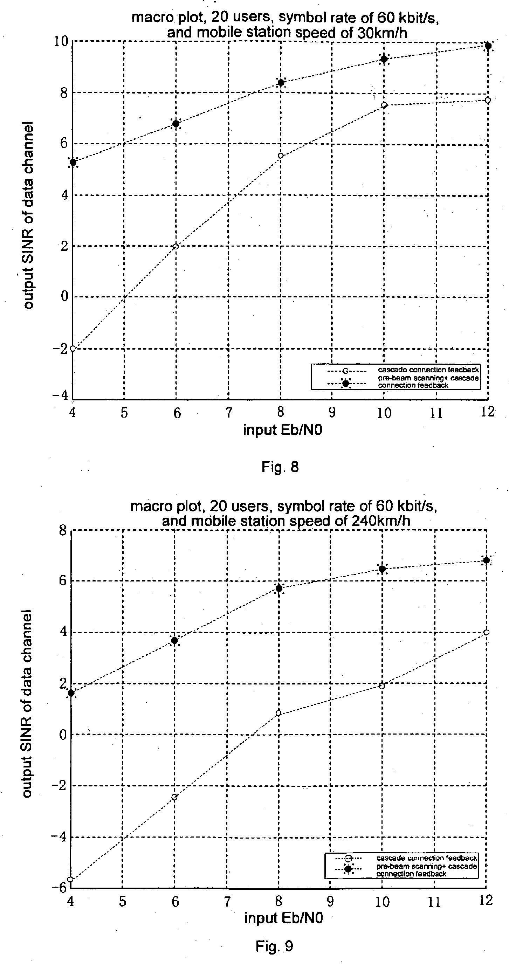

Fig.8 and fig.9 are curve graphs showing input-output signal to jamming noise ratio in accordance with an embodiment of the present invention. The simulation condition of the experiment is: 4 array elements' even line arrays, 20 users, and 4 Jack decay multipaths with equal strength for each user. Wherein fig. 8 shows the output SINR of data channels of the smart antenna in the embodiment of the present invention in macro plot, with 20 users, the data length of 20 frames, symbol rate of 60 kbit/s, and mobile station speed of 30km/h. The abscissa Eb/N0 indicates the input signal to noise ratio(S/N) with the variation scope of 4-12dB, and the interval of 2dB. It can be figured out from the drawing that when the input S/N is 8dB, the output S/N of the present invention is about 8.7dB, but the output S/N without beam scanning method is approximately 5.3dB, with a difference of 3.5dB; and when the input S/N is 4 dB, 6dB, 10 dB and 12dB, the results are quite similar. Thus, the output S/N increases while the method of the present invention is adopted.

Fig. 9 shows the output SINR of data channels of the smart antenna in the embodiment of the present invention in macro plot, with 20 users, symbol rate of 60 kbit/s, and mobile station speed of 240km/h. The abscissa Eb/N0 indicates the input S/N with the variation scope of 4-12dB, and the interval of 2dB. When the input S/N is 8dB, the output S/N of the present invention is about 5.6dB, but the output S/N without beam scanning method is approximately 0.9dB, with a difference of 4.7dB; and when the input S/N is 4 dB, 6dB, 10 dB and 12dB, the results are quite similar. Thus, the output S/N increases while the method of the present invention is adopted.

From the foregoing, it can be realized that although the present invention has been illustrated in details by some exemplary embodiments, the present invention is not exhaustive. Various variations and modifications can be realized within the scope of the present invention by one skilled in the art. For example, although the foregoing embodiments aim at WCDMA system, it will be understood by one skilled in the art that they are also applicable to other systems based on CDMA.

**Claims**

1.  A method for forming beam of a smart antenna, comprising:

    forming a single beam according pre-calculated weighted values;
    multipath scanning an allocated area by discrete single beams with preset angle intervals and beamwidths;
    recording the scanning angles when a desired user is found in one or more scanning angle and calculating the multipath time delays corresponding to the scanning angles to obtain multipath delayed information;
    aligning time delays of the received signals on the basis of the multipath delayed information; and
    forming adaptive beams for the received signals whose time delays have been aligned;
    wherein the steps of forming the adaptive beams include:

    finding an initial weighted value by using a pilot signal of a special control channel as a reference signal;
    performing spatial domain treatment of the signal received by an antenna array by using the initial weighted value;
    obtaining determination output of special control channel information on the basis of the signal performed by the spatial domain treatment above;
    finding optimized weighted value according to a known and determined special control channel information; and
    using the optimized weighted value above to form beam and processing the special data channel information;

    wherein the steps to find the initial weighted value include:

    spreading and scrambling pilot bits of the known special control channel;
    calculating correlation matrix of pilot signal obtained by said spreading and descrambling and pilot signal received by an antenna array; and

finding approximate solution of the correlation matrix as the initial weighted value according to Minimum Mean Square Error criterion.

2. The method for beam forming according to claim 1, wherein the angle intervals of the scanning beam are smaller than the least beam width.

3. The method for forming beam according to claim 1, wherein the steps after obtaining determination output of the special control channel information further include:

estimating signal to jamming noise ratio of determination output data bit; and

repeating the prior step if the signal to jamming noise ratio is smaller than one preset threshold.

4. The method for forming beam according to claim 1, wherein the step to perform spatial domain treatment of signals received by the array includes:

forming beam respectively for each large delay multipath component of the users according to searched out information of multipath and by using the initial weighted value.

5. The method for forming beam according to claim 1, wherein the steps of obtaining determination output of the special control channel information include:

de-spreading and descrambling beam formed signals in the pilot period; and
estimating binary gain by using the de-spreading and descrambling result, and determining non-pilot period information in a control part ion.

6. The method for forming beam according to claim 3, wherein the steps to find the optimized weighted value include:

spreading and scrambling a known pilot symbol and determined non-pilot information as a new reference signal; and
calculating correlation matrix of the new reference signal and new received signal, and finding the optimized weighted value according to Minimum Mean Square Error criterion.

7. A device for forming beam of the smart antenna, comprising:

a spatial domain beam forming module (21) for forming beam of the signal received by the antenna array, consisting of a multipath scanning delay alignment unit (211) for multipath scanning an allocated area by discrete single beams with preset angle intervals and beamwidths to gain delay information and aligning delays for the signals received by the antenna array;
a time domain matched filtering module (22) for gaining transmitted data according to the signal of beam formed by the spatial domain beam forming module (21); and
a re-spreading and scrambling feedback module (23) for generating a reference signal and feeding back the reference signal to the spatial domain beam forming module (21) according to data information gained by the time domain matched filtering module (22);
wherein the spatial domain beam forming module (21) is further configured to:

find an initial weighted value by using a pilot signal of a special control channel as a reference signal;
perform spatial domain treatment of the signal received by an antenna array by using the initial weighted value;
obtain determination output of special control channel information on the basis of the signal performed by the spatial domain treatment above;
find optimized weighted value according to a known and determined special control channel information; and
use the optimized weighted value above to form beam and processing the special data channel information;

wherein the re-spreading and scrambling feedback module (23) is further configured to:

spread and scramble pilot bits of the known special control channel;

the spatial domain beam forming module (21) is further configured to:

calculate correlation matrix of pilot signal obtained by said spreading and descrambling and pilot signal received by an antenna array, and

find approximate solution of the correlation matrix as the initial weighted value according to Minimum Mean Square Error criterion.

8. The device for forming beam according to claim 7, wherein the multipath scanning delay alignment unit (211) comprises:

a scanning beam forming unit (2110) for forming discrete scanning beam by the preset angle intervals and preset beamwidths;

a time delay searcher for searching multipath delays of scanning beam formed by the scanning beam forming unit (2110); and

a time delay alignment unit (2114) for aligning delays of multipath signal received by the antenna array according to the multipath delay searched by the time delay searcher.

9. The device for forming beam according to claim 7, wherein the spatial domain beam forming module (21) further comprises:

a weighted value estimation unit (212) for calculating multiple weighted values of beam forming according to the reference signal fed back by the re-spreading and scrambling feedback module (23);

a plurality of multipliers for respectively multiplying corresponding weighted value calculated by the weighted value estimation unit (212) and corresponding signal received by array element of the antenna array; and

an adder for summing the outputs of a plurality of multipliers.

10. The device for forming beam according to claim 7, wherein the time domain matched filtering module (22) comprises:

a descrambling unit (221) and de-spreading unit (222) for descrambling and de-spreading the signal of beam formed by the spatial domain beam forming module (21);

a Rake combination unit (223) for Rake combining multipath signals; and

a data bit determination unit (224) for determining Rake combined signals and outputting the transmitted data of Rake combined signals.

11. The device for forming beam according to claim 7, wherein the re-spreading and scrambling feedback module (23) comprises:

a re-spreading unit (232) and scrambling unit (231) for re-spreading and scrambling the transmitted data gained by the time domain matched filtering module (22) as the reference signal.

12. The device for forming beam according to claim 9, wherein the weighted value estimation unit (212) calculates correlation matrix of the reference signal and the received signal of the antenna array; and finds approximate solution of the correlation matrix as the weighted value according to Minimum Mean Square Error criterion.

13. The device for forming beam according to claim 12, wherein under the circumstance that transmitted data has not been gained, the re-spreading and scrambling feedback module (23) spreads and scrambles by pilot bits of the known special control channel as the reference signal, and the weighted value estimation unit (212) calculates correlation matrix of the reference signal and the pilot signal received by the antenna array and finds approximate solution of the correlation matrix as the weighted value according to Minimum Mean Square Error criterion.

14. A smart antenna, **characterized by** comprising: an antenna array composed of a plurality of array elements and the device for forming beam according to any one of the claims 7 to 13.

**Patentansprüche**

1. Verfahren zum Formen eines Strahls einer intelligenten Antenne, das Folgendes umfasst:

Formen eines einzelnen Strahls gemäß zuvor berechneten gewichteten Werten;

Mehrpfadabtastung eines zugewiesenen Bereichs durch diskrete Einzelstrahlen mit voreingestellten Winkelintervallen und Strahlbreiten;

Aufzeichnen der Abtastwinkel, wenn ein gewünschter Nutzer in einem oder mehreren Abtastwinkeln gefunden wird, und Berechnen der Mehrpfadzeitverzögerungen entsprechend den Abtastwinkeln, um mehrpfadverzögerte Informationen zu erhalten;

Ausrichten von Zeitverzögerungen der empfangenen Signale auf der Basis der mehrpfadverzögerten Informationen; und

Formen adaptiver Strahlen für die empfangenen Signale, deren Zeitverzögerungen ausgerichtet wurden;

wobei die Schritte des Formens der adaptiven Strahlen Folgendes enthalten:

Finden eines anfänglichen gewichteten Wertes durch Verwendung eines Pilotsignals eines speziellen Steuerkanals als ein Referenzsignal;

Ausführen einer Raumdomänenbehandlung des durch ein Antennen-Array empfangenen Signals unter Verwendung des anfänglichen gewichteten Wertes;

Erhalten einer Bestimmungsausgabe von speziellen Steuerkanalinformationen auf der Basis des Signals, das durch die oben beschriebene Raumdomänenbehandlung ausgeführt wurde;

Finden eines optimierten gewichteten Wertes gemäß bekannter und bestimmter spezieller Steuerkanalinformationen; und

Verwenden des oben beschriebenen optimierten gewichteten Wertes zum Formen eines Strahls und Verarbeiten der speziellen Datenkanalinformationen;

wobei die Schritte zum Finden des anfänglichen gewichteten Wertes Folgendes enthalten:

Spreizen und Verwürfeln von Pilot-Bits des bekannten speziellen Steuerkanals;

Berechnen einer Korrelationsmatrix von Pilotsignalen, die durch das Spreizen und Entwürfeln erhalten wurden, und von Pilotsignalen, die durch ein Antennen-Array empfangen wurden; und

Finden einer genäherten Lösung der Korrelationsmatrix als den anfänglichen gewichteten Wert gemäß einem Kriterium des kleinsten mittleren quadratischen Fehlers.

2. Verfahren zur Strahlformung nach Anspruch 1, wobei die Winkelintervalle des Abtaststrahls kleiner sind als die geringste Strahlbreite.

3. Verfahren zum Formen eines Strahls nach Anspruch 1, wobei die Schritte nach dem Erhalten der Bestimmungsausgabe der speziellen Steuerkanalinformationen des Weiteren Folgendes enthalten:

Schätzen eines Signal-Störrausch-Verhältnisses eines Bestimmungsausgabe-Datenbits; und

Wiederholen des vorherigen Schrittes, falls das Signal-Störrausch-Verhältnis kleiner ist als eine einzelne voreingestellte Schwelle.

4. Verfahren zum Formen eines Strahls nach Anspruch 1, wobei der Schritt des Ausführens einer Raumdomänenbehandlung von durch das Array empfangenen Signalen Folgendes enthält:

Formen eines Strahls jeweils für jede große Verzögerungsmehrpfadkomponente des Nutzers gemäß herausgesuchten Mehrpfadinformationen und unter Verwendung des anfänglichen gewichteten Wertes.

5. Verfahren zum Formen eines Strahls nach Anspruch 1, wobei die Schritte des Erhaltens der Bestimmungsausgabe der speziellen Steuerkanalinformationen Folgendes enthalten:

Entspreizen und Entwürfeln von strahlgeformten Signalen im Pilotzeitraum; und

Schätzen einer binären Verstärkung unter Verwendung des Entspreizungs- und Entwürfelungsergebnisses, und Bestimmen von Nicht-Pilotzeitraum-Informationen in einem Steuerungsteil-Ion.

6. Verfahren zum Formen eines Strahls nach Anspruch 3, wobei die Schritte zum Finden des optimierten gewichteten Wertes Folgendes enthalten:

Spreizen und Verwürfeln eines bekannten Pilotsymbols und bestimmter Nicht-Pilot-Informationen als ein neues Referenzsignal; und

Berechnen einer Korrelationsmatrix des neuen Referenzsignals und eines neuen empfangenen Signals, und Finden des optimierten gewichteten Wertes gemäß einem Kriterium des kleinsten mittleren quadratischen Fehlers.

**7.** Vorrichtung zum Formen eines Strahls der intelligenten Antenne, das Folgendes umfasst:

ein Raumdomänen-Strahlformungsmodul (21) zum Formen eines Strahls des durch das Antennen-Array empfangenen Signals, bestehend aus einer Mehrpfadabtastungsverzögerungs-Ausrichtungseinheit (211) zur Mehrpfadabtastung eines zugewiesenen Bereichs durch diskrete Einzelstrahlen mit voreingestellten Winkelintervallen und Strahlbreiten zum Verstärken von Verzögerungsinformationen und Ausrichten von Verzögerungen für die durch das Antennen-Array empfangenen Signale;
ein Zeitdomänenabstimm-Filterungsmodul (22) zum Verstärken gesendeter Daten gemäß dem Signal eines durch das Raumdomänen-Strahlformungsmodul (21) gebildeten Strahls; und
ein Entspreizungs- und Verwürfelungs-Rückkopplungsmodul (23) zum Erzeugen eines Referenzsignals und Rückkoppeln des Referenzsignals zu dem Raumdomänen-Strahlformungsmodul (21) gemäß Dateninformationen, die durch das Zeitdomänenabstimm-Filterungsmodul (22) verstärkt wurden;
wobei das Raumdomänen-Strahlformungsmodul (21) des Weiteren für Folgendes konfiguriert ist:

Finden eines anfänglichen gewichteten Wertes unter Verwendung eines Pilotsignals eines speziellen Steuerkanals als ein Referenzsignal;
Ausführen einer Raumdomänenbehandlung des durch ein Antennen-Array empfangenen Signals unter Verwendung des anfänglichen gewichteten Wertes;
Erhalten einer Bestimmungsausgabe von speziellen Steuerkanalinformationen auf der Basis des durch die oben erwähnte Raumdomänenbehandlung ausgeführten Signals;
Finden eines optimierten gewichteten Wertes gemäß bekannter und bestimmter spezieller Steuerkanalinformationen; und
Verwenden des oben erwähnten optimierten gewichteten Wertes zum Formen eines Strahls und Verarbeiten der speziellen Datenkanalinformationen;
wobei das Entspreizungs- und Verwürfelungs-Rückkopplungsmodul (23) des Weiteren für Folgendes konfiguriert ist:

Spreizen und Verwürfeln von Pilot-Bits des bekannten speziellen Steuerkanals;
wobei das Raumdomänen-Strahlformungsmodul (21) des Weiteren für Folgendes konfiguriert ist:

Berechnen einer Korrelationsmatrix eines Pilotsignals, das durch das Spreizen und Entwürfeln eines durch ein Antennen-Array empfangenen Pilotsignals erhalten wurde, und
Finden einer genäherten Lösung der Korrelationsmatrix als der anfängliche gewichtete Werte gemäß einem Kriterium des kleinsten mittleren quadratischen Fehlers.

**8.** Vorrichtung zum Formen eines Strahls nach Anspruch 7, wobei die Mehrpfadabtastungsverzögerungs-Ausrichtungseinheit (211) Folgendes umfasst:

eine Abtaststrahlformungseinheit (2110) zum Formen eines diskreten Abtaststrahls durch die voreingestellten Winkelintervalle und voreingestellten Strahlbreiten;
eine Zeitverzögerungs-Suchvorrichtung zum Suchen nach Mehrpfadverzögerungen des durch die Abtaststrahlformungseinheit (2110) gebildeten Abtaststrahls; und
eine Zeitverzögerungsausrichtungseinheit (2114) zum Ausrichten von Verzögerungen des durch das Antennen-Array empfangenen Mehrpfadsignals gemäß der durch die Zeitverzögerungs-Suchvorrichtung gesuchten Mehrpfadverzögerung.

**9.** Vorrichtung zum Formen eines Strahls nach Anspruch 7, wobei das Raumdomänen-Strahlformungsmodul (21) des Weiteren Folgendes umfasst:

eine Gewichtete-Werte-Schätzungseinheit (212) zum Berechnen mehrerer gewichteter Werte einer Strahlformung gemäß dem durch das Entspreizungs- und Verwürfelungs-Rückkopplungsmodul (23) rückgekoppelten Referenzsignal;
mehrere Multiplikatoren zum jeweiligen Multiplizieren eines entsprechenden durch die Gewichtete-Werte-Schätzungseinheit (212) berechneten gewichteten Wertes und eines entsprechenden durch ein Array-Element des Antennen-Arrays empfangenen Signals; und

einen Addierer zum Summieren der Ausgaben mehrerer Multiplikatoren.

10. Vorrichtung zum Formen eines Strahls nach Anspruch 7, wobei das Zeitdomänenabstimm-Filterungsmodul (22) Folgendes umfasst:

eine Entwürfelungseinheit (221) und Entspreizungseinheit (222) zum Entwürfeln und Entspreizen des Signal eines durch das Raumdomänen-Strahlformungsmodul (21) gebildeten Strahls;
eine Rake-Kombinationseinheit (223) zur Rake-Kombination von Mehrpfadsignalen; und
eine Datenbitbestimmungseinheit (224) zum Bestimmen Rake-kombinierter Signale und Ausgeben der gesendeten Daten von Rake-kombinierten Signalen.

11. Vorrichtung zum Formen eines Strahls nach Anspruch 7, wobei das Entspreizungs- und Verwürfelungs-Rückkopplungsmodul (23) Folgendes umfasst:

eine Entspreizungseinheit (232) und eine Verwürfelungseinheit (231) zum Entspreizen und Verwürfeln der durch das Zeitdomänenabstimm-Filterungsmodul (22) verstärkten gesendeten Daten als das Referenzsignal.

12. Vorrichtung zum Formen eines Strahls nach Anspruch 9, wobei die Gewichtete-Werte-Schätzungseinheit (212) eine Korrelationsmatrix des Referenzsignals und des empfangenen Signals des Antennen-Arrays berechnet; und eine genäherte Lösung der Korrelationsmatrix als den gewichteten Wert gemäß einem Kriterium des kleinsten mittleren quadratischen Fehlers findet.

13. Vorrichtung zum Formen eines Strahls nach Anspruch 12, wobei unter dem Umstand, dass gesendete Daten nicht verstärkt wurden, das Entspreizungs- und Verwürfelungs-Rückkopplungsmodul (23) durch Pilot-Bits des bekannten speziellen Steuerkanals als das Referenzsignal spreizt und verwürfelt, und die Gewichtete-Werte-Schätzungseinheit (212) eine Korrelationsmatrix des Referenzsignal und des durch das Antennen-Array empfangenen Pilotsignals berechnet und eine genäherte Lösung der Korrelationsmatrix als den gewichteten Wert gemäß einem Kriterium des kleinsten mittleren quadratischen Fehlers findet.

14. Intelligente Antenne, **dadurch gekennzeichnet, dass** sie ein Antennen-Array umfasst, das aus mehreren Array-Elementen und der Vorrichtung zum Formen eines Strahls nach einem der Ansprüche 7 bis 13 besteht.


**Revendications**

1. Procédé de formation d'un faisceau d'une antenne à semi-conducteurs, comprenant :

la formation d'un faisceau unique en fonction de valeurs pondérées préalablement calculées ;
le balayage multivoies d'une zone allouée par des faisceaux uniques discrets avec des intervalles d'angles préréglés et des largeurs de faisceau préréglées ;
l'enregistrement des angles de balayage lorsqu'un utilisateur souhaité est trouvé à un ou plusieurs angles de balayage et le calcul des retards de temps multivoies correspondant aux angles de balayage pour obtenir des informations retardées multivoies ;
l'alignement des retards de temps des signaux reçus sur la base des informations retardées multivoies ; et
la formation de faisceaux adaptatifs pour les signaux reçus dont les retards de temps ont été alignés ;
dans lequel les étapes de formation de faisceaux adaptatifs comprennent :

la recherche d'une valeur pondérée initiale en utilisant un signal pilote d'un canal de commande spécial en tant que signal de référence ;
l'exécution d'un traitement dans le domaine spatial du signal reçu par un réseau d'antennes en utilisant la valeur pondérée initiale ;
l'obtention d'une sortie de détermination d'informations de canal de commande spécial sur la base du signal effectué par le traitement dans le domaine spatial ci-dessus ;
la recherche d'une valeur pondérée optimisée en fonction d'informations de canal de commande spécial connues et déterminées ; et
l'utilisation de la valeur pondérée optimisée ci-dessus pour former un faisceau et le traitement des informations de canal de données spécial ;
dans lequel les étapes de recherche de la valeur pondérée initiale comprennent :

l'étalement et le brouillage de bits pilotes du canal de commande spécial connu ;
le calcul d'une matrice de corrélation du signal pilote obtenu par ledit étalement et le désembrouillage d'un signal pilote reçu par un réseau d'antennes ; et
la recherche d'une solution approximative de la matrice de corrélation en tant que valeur pondérée initiale en fonction d'un critère d'erreur quadratique moyenne minimale.

2. Procédé de formation de faisceau selon la revendication 1, dans lequel les intervalles d'angle du faisceau de balayage sont plus petits que la plus petite largeur de faisceau.

3. Procédé de formation de faisceau selon la revendication 1, dans lequel les étapes après l'obtention de la sortie de détermination des informations de canal de commande spécial comprennent en outre :

l'estimation du rapport de signal sur bruit de brouillage du bit de données de sortie de détermination ; et
la répétition de l'étape précédente si le rapport de signal sur bruit de brouillage est inférieur à un seuil préréglé.

4. Procédé de formation de faisceau selon la revendication 1, dans lequel l'étape de l'exécution d'un traitement dans le domaine spatial de signaux reçus par le réseau comprend :

la formation de faisceau respectivement pour chaque grande composante multivoies de retard des utilisateurs en fonction des informations recherchées de multivoies et par l'utilisation de la valeur pondérée initiale.

5. Procédé de formation de faisceau selon la revendication 1, dans lequel les étapes de l'obtention de la sortie de détermination des informations de canal de commande spécial comprennent :

le désétalement et le désembrouillage de signaux formés en faisceau dans la période pilote ; et
l'estimation de gain binaire par l'utilisation du résultat de désétalement et de désembrouillage, et la détermination d'informations de période non-pilote dans un ion de partie de commande.

6. Procédé de formation de faisceau selon la revendication 3, dans lequel les étapes de recherche de la valeur pondérée optimisée comprennent :

l'étalement et le brouillage d'un symbole pilote connu et d'informations non-pilotes déterminées en tant que nouveau signal de référence ; et
le calcul d'une matrice de corrélation du nouveau signal de référence et du nouveau signal reçu et la recherche de la valeur pondérée optimisée en fonction du critère d'erreur quadratique moyenne minimale.

7. Dispositif de formation de faisceau de l'antenne à semi-conducteurs, comprenant :

un module de formation de faisceau dans le domaine spatial (21) pour effectuer la formation de faisceau du signal reçu par le réseau d'antennes, se composant d'une unité d'alignement de retard de balayage multivoies (211) pour un balayage multivoies d'une zone allouée par des faisceaux uniques discrets avec des intervalles d'angles préréglés et des largeurs de faisceau préréglées pour obtenir des informations de retard et l'alignement des retards pour les signaux reçus par le réseau d'antennes ;
un module de filtrage adapté dans le domaine de temps (22) pour obtenir des données émises en fonction du signal formé en faisceau par le module de formation de faisceau dans le domaine spatial (21) ; et
un module de rétroaction de réétalement et de brouillage (23) pour effectuer la génération d'un signal de référence et la rétroaction du signal de référence au module de formation de faisceau dans le domaine spatial (21) en fonction d'informations de données obtenues par le module de filtrage adapté dans le domaine de temps (22) ;
dans lequel le module de formation de faisceau dans le domaine spatial (21) est en outre configuré pour effectuer :

la recherche d'une valeur pondérée initiale en utilisant un signal pilote d'un canal de commande spécial en tant que signal de référence ;
l'exécution d'un traitement dans le domaine spatial du signal reçu par un réseau d'antennes en utilisant la valeur pondérée initiale ;
l'obtention d'une sortie de détermination d'informations de canal de commande spécial sur la base du signal effectué par le traitement dans le domaine spatial ci-dessus ;
la recherche d'une valeur pondérée optimisée en fonction d'informations de canal de commande spécial connues et déterminées ; et

l'utilisation de la valeur pondérée optimisée ci-dessus pour former un faisceau et le traitement des informations de canal de données spécial ;

dans lequel le module de rétroaction de réétalement et de brouillage (23) est en outre configuré pour effectuer :

l'étalement et le brouillage de bits pilotes du canal de commande spécial connu ;

le module de formation de faisceau dans le domaine spatial (21) est en outre configuré pour effectuer :

le calcul d'une matrice de corrélation du signal pilote obtenu par ledit étalement et ledit désembrouillage d'un signal pilote reçu par un réseau d'antennes ; et

la recherche d'une solution approximative de la matrice de corrélation en tant que valeur pondérée initiale en fonction d'un critère d'erreur quadratique moyenne minimale.

8. Dispositif de formation de faisceau selon la revendication 7, dans lequel l'unité d'alignement de retard de balayage multivoies (211) comprend :

une unité de formation de faisceau de balayage (2110) pour effectuer la formation de faisceau de balayage discret par les intervalles d'angles préréglés et les largeurs de bande préréglées ;

un chercheur de retard de temps pour effectuer la recherche de retards multivoies du faisceau de balayage formé par l'unité de formation de faisceau de balayage (2110) ; et

une unité d'alignement de retard de temps (2114) pour effectuer l'alignement de retards du signal multivoies reçu par le réseau d'antennes en fonction du retard multivoies recherché par le chercheur de retard de temps.

9. Dispositif de formation de faisceau selon la revendication 7, dans lequel le module de formation de faisceau dans le domaine spatial (21) comprend en outre :

une unité d'estimation de valeur pondérée (212) pour effectuer le calcul de multiples valeurs pondérées de formation de faisceau en fonction du signal de référence retourné par le module de rétroaction de réétalement et de brouillage (23) ;

une pluralité de multiplicateurs pour effectuer la multiplication respective de la valeur pondérée correspondante calculée par l'unité d'estimation de valeur pondérée (212) et du signal correspondant reçu par un élément de réseau du réseau d'antennes ; et

un additionneur pour sommer les sorties d'une pluralité de multiplicateurs.

10. Dispositif de formation de faisceau selon la revendication 7, dans lequel le module de filtrage adapté dans le domaine de temps (22) comprend :

une unité de désembrouillage (221) et une unité de désétalement (222) pour effectuer le désembrouillage et le désétalement du signal de faisceau formé par le module de formation de faisceau dans le domaine spatial (21) ;

une unité de combinaison Rake (223) pour effectuer la combinaison Rake de signaux multivoies ; et

une unité de détermination de bits de données (224) pour effectuer la détermination de signaux combinés par combinaison Rake et la sortie de données émises de signaux combinés par combinaison Rake.

11. Dispositif de formation de faisceau selon la revendication 7, dans lequel le module de rétroaction de réétalement et de brouillage (23) comprend :

une unité de réétalement (232) et une unité de brouillage (231) pour effectuer le réétalement et le brouillage des données émises obtenues par le module de filtrage adapté dans le domaine de temps (22) en tant que signal de référence.

12. Dispositif de formation de faisceau selon la revendication 9, dans lequel l'unité d'estimation de valeur pondérée (212) effectue le calcul d'une matrice de corrélation du signal de référence et du signal reçu du réseau d'antennes et la recherche d'une solution approximative de la matrice de corrélation en tant que valeur pondérée en fonction du critère d'erreur quadratique moyenne minimale.

13. Dispositif de formation de faisceau selon la revendication 12, dans lequel, s'il n'a pas été obtenu de données émises, le module de rétroaction de réétalement et de brouillage (23) effectue l'étalement et le brouillage par des bits pilotes du canal de commande spécial connu en tant que signal de référence, et l'unité d'estimation de valeur pondérée (212) effectue le calcul d'une matrice de corrélation du signal de référence et du signal pilote reçu par le réseau d'antennes et la recherche d'une solution approximative de la matrice de corrélation en tant que valeur pondérée en fonction du critère d'erreur quadratique moyenne minimale.

**14.** Antenne à semi-conducteurs, **caractérisée en ce qu'**elle comprend : un réseau d'antennes composé d'une pluralité d'éléments d'antennes et le dispositif de formation de faisceau selon l'une quelconque des revendications 7 à 13.

101

```
multipath scanning with discrete beam,
aligning delay
```

105

```
spreading and scrambling the known
special control channel pilot
signal as reference signal, finding the
initial weighted value
```

110

```
with said initial weighted value,
performing spatial domain treatment
on receiving signal
```

115

```
descrambling and de-spreading
the signal which had performed
spatial domain treatment, and
determining to obtain special
control channel information
```

120

does the
signal to jamming noise ratio satisfy    No
the requirement?

Yes    125

```
re-spreading and scrambling the
special control information as
reference signal, and finding the
optimized weighted value
```

130

```
beam forming by the
optimized weighted value
```

Fig. 1

Fig. 2

spatial domain beam forming module 21

time domain matched filtering module 22

respreading and scrambling feedback module 23

multipath scanning, aligning delay — 211

210.1  $x_1(k)$
210.2  $x_2(k)$
210.N  $x_n(k)$

213.1  $w_1$
213.2  $w_2$
213.N  $w_N$

214  Σ

$y(k)$

212  weighted value estimation

Reference signal — 233

$d(k)$

scrambling — 232
spreading — 231
pilot symbol — 234

descrambling — 221
de-spreading — 222

$z(n)$

pilot symbol: accessorial channel estimation

Other branches

Σ

Rake combination — 223

data bit determination — 224

signal to jamming noise ratio calculation and determination — 225

$b(n)$

output

20

Fig. 3

Fig. 4

Fig. 5

Fig. 6

scanning area 1

3. 101

3. 102

3. 103

3. 104

3. 304

3. 303

3. 302

3. 301

scanning area 3

3. 201    3. 202    3. 203    3. 204

scanning area 2

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1198045
- CN 1235391
- EP 1093241 A1
- US 6177906 B1
- EP 1161001 A2

**Non-patent literature cited in the description**

- **MINAKO KITAHARA et al.** VTC2000-Spring. *IEEE 51st Vehicular Technology Conference Processings,* 2000, vol. 2, 710-715